# EUROPÄISCHE PATENTANMELDUNG

(11) **EP 1 559 689 A2**
(43) Veröffentlichungstag der Anmeldung: **03.08.2005**
(21) Anmeldenummer: 05466001.4
(22) Anmeldetag: 27.01.2005
(51) Int. Cl.: C03B 9/41

(54) **Verfahren zur Regelung des Erzeugungsprozesses und Einrichtung zur Durchführung dieses Verfahrens**

(30) Priorität: 29.01.2004 CZ 20040157
(71) Anmelder: Markus Trading, s.r.o., 463 11 Liberec (CZ)
(72) Erfinder: Tomasek, Dusan, 763 26 Luhacovice (CZ); Sretr, Rostislav, 763 41 Biskupice (CZ)
(74) Vertreter: Calek, Karel (CZ)

(57) **Zusammenfassung**

Verfahren zur Regelung des Ablaufs des Erzeugungsprozesses, besonders in der Glasindustrie mit dem Proportionalventil, womit der Ablauf des Pressdruckes in Abhängigkeit von der Zeit nach einer Steuerkurve aus PC gesteuert wird. Mittels des Programms im PC wird die Steuerkurve gebildet, die eine ideale Kurve ist, die nach der Anforderung der Maschinenbedienung einen idealen Druckablauf in Abhängigkeit von der Zeit dargestellt. Die Steuerkurve wird mittels einer Serien-Kommunikation in einen Aufbau des Proportionalventils übertragt, wo gespeichert bzw. eingeschrieben ist. Ein für eine Bildung einer effektiven Kurve Austrittsdruck wird mittels des Aufbaus reguliert, der einen ausgehenden aus dem Proportionalventil effektiven Druckablauf in Abhängigkeit von der Zeit darstellt. Mittels des Aufbaus wird der Ablauf der effektiven Kurve mit dem Ablauf der Steuerkurve nach der Anforderung der Maschinenbedienung vergleicht und ob der Ablauf der effektiven Kurve der Steuerkurve entspricht, ist der Ablauf des Erzeugungsprozesses richtig eingestellt, und ob er nicht entspricht, wird die Ausbildung der Steuerkurve im PC wiederholt. Einrichtung zur Durchführung des Verfahrens besteht aus einem durch das bisherige Proportionalventil gebildeten unteren Grundteil (I), und aus einem oberen Steuerteil (II) in der Form des Aufbaus auf dem Grundteil (I), wobei der Steuerteil (II) eine Haube (1) für Steuerelemente enthält, wodurch ein Kabel (3) axial durchgeht, welches das Steuerventil mit dem PC und den weiteren Peripherien verbindet.

## Beschreibung

Die Erfindung betrifft ein Gebiet der Herstellung von Glaskörpern auf den Glasformmaschinen. Die Erfindung betrifft ein Verfahren zur Regelung des Erzeugungsprozesses und eine Einrichtung zur Durchführung dieses Verfahrens. Das angeführte Verfahren betrifft insbesondere ein Verfahren zur Regelung des Erzeugungsprozesses in der Glasindustrie, bei der Herstellung von Glaserzeugnissen, zum Beispiel bei dem Pressblasen von Glaskörpern aus der geschmolzenen Glasmasse, insbesondere für eine gesteuerte Bewegung beim Pressen der Glasmasse mit dem Pressstempel.

Im bekannten Stand der Technik in der Serienfertigung oder Massenfertigung besteht ein Bedarf an eine operative und automatische Regelung des Erzeugungsprozesses. Ob es sich um eine Regelung des Erzeugungsprozesses in der Glasindustrie handelt, wird in der gegenwärtigen Zeit die Regelung des Erzeugungsprozesses, insbesondere beim Pressen der Glasmasse, mittels der bestehenden Proportionalventile durchgeführt, welche geläufig kommerziell zur Verfügung sind. Für einen geforderten Pressablauf wird das angeführte Proportionalventil oder die Proportionalventile im voraus auf eine Einzweckanwendung für jedes individuelles Erzeugnis nach einem einfachen Diagramm in Abhängigkeit des Pressdruckes von der Zeit eingestellt. Ein graphisch dargestellter Ablauf der Presszeit in Abhängigkeit von der Zeit ist rechteckig, d.h. dass die niedrige Seite des Rechtecks einen Druckwert 0 hat, d.h. dass sie gerade in der Zeitachse liegt und die obere Seite des Rechtecks dann in einem eingestellten Pegel des Pressdruckes ist. Dieser Pegel entspricht der Einstellung von Spannung an den Potentiometern in der Seitenwand der Glasformmaschine. Die Breite des Rechtecks ist vom Übergeordneten System gewöhnlich vom NC System abhängig, welches eine Länge des Arbeitszyklus, in diesem Falle eine Länge des Presszyklus, bestimmt.

Das angeführte Proportionalventil ermöglicht nur eine Druckgröße zu beeinflussen, nach dem mittels des Potentiometers in der Seitenwand der Glasformmaschine eingestellten Eintrittssignals 0 - 10 V.

Beispiel: ob eine Spannung von 3 V eingestellt wurde, so dazu ein Druck 200 kPa entsprach und dieser Druck wurde während der ganze Zeit des Presszyklus gehalten und nach der Beendigung des Zyklus sank er auf Null.

Die Hauptnachteile des bisherigen Verfahrens und der bisherigen mittels der angeführten Proportionalventile gebildeten Einrichtung sind folgend:
- es mangelt an Rückkopplung
- eine Ungenauigkeit und eine schlechte Wiederholbarkeit
- eine Nötigkeit der Kalibrierung
- eine Entstehung der Glasfehler

Es mangelt stets an Möglichkeit einer operativen und automatischen Regelung des Erzeugungsprozesses und zwar auch im Ablauf dieses Erzeugungsprozesses.

Der Erfindung liegt die Aufgabe zugrunde, die angeführten Nachteile zu beseitigen, bei einer gleichzeitigen Ausnutzung des derzeitigen Verfahrens der Steuerung, mit der Ausnutzung der erreichbaren NC Technik. Es wurde deshalb ein neues Verfahren zur Regelung des Ablaufs des Erzeugungsprozesses, insbesondere ein Verfahren zur Regelung des Erzeugungsprozesses in der Glasindustrie, bei der Fertigung der Glaserzeugnissen zum Beispiel bei dem Pressblasen der Glaskörper aus der geschmolzenen Glasmasse, insbesondere für eine gesteuerte Bewegung bei dem Pressen der Glasmasse mit dem Pressstempel, mittels des Proportionalventils, womit der Ablauf des Pressdruckes in Abhängigkeit von der Zeit nach einer Steuerkurve aus PC nach der Erfindung gesteuert wird, dadurch gekennzeichnet, dass mittels des Programms im PC die Steuerkurve gebildet wird, wobei die Steuerkurve eine darstellende einen idealen Druckablauf in Abhängigkeit von der Zeit ideale Kurve ist, nach der Anforderung der Maschinenbedienung, weiterhin wird die Steuerkurve mittels einer Serienkommunikation in einen aufbereiteten Aufbau des Proportionalventils übertragt, wo gespeichert bzw. eingeschrieben ist, weiterhin wird mittels des Aufbaus des Proportionalventils ein für eine Bildung einer effektiven Kurve Austrittsdruck reguliert, der einen effektiven Druckablauf in Abhängigkeit von der Zeit darstellt, d.h. den aus dem Proportionalventil ausgehenden Druckablauf, weiterhin wird mittels des Aufbaus der Ablauf der effektiven Kurve mit dem Ablauf der Steuerkurve nach der Anforderung der Maschinenbedienung vergleicht und ob der Ablauf der effektiven Kurve der Steuerkurve nach der Anforderung der Maschinenbedienung entspricht, ist der Ablauf des Erzeugungsprozesses richtig eingestellt, und ob der Ablauf der effektiven Kurve der Steuerkurve nach der Anforderung der Maschinenbedienung nicht entspricht, wird die Ausbildung der Steuerkurve im PC wiederholt.

Nach einer vorteilhaften Ausführung dieses Verfahrens wird die Steuerkurve mittels der Instrumente in dem PC Steuerprogramm so gebildet, dass diese Steuerkurve in eine im voraus gestellte Anzahl der Punkte geteilt wird, zwischen denen ein konstanter Zuwachs ist und die Maschinenbedienung bestimmt, welcher dieser Punkte ein Steuerpunkt wird, in welchem es zur Änderung der Steigung der Kurve kommt, d.h. der Tangente des Winkels der Steuerkurve zur waagerechten Achse, und damit es die geforderte Form der Steuerkurve erzielt ist.

Die Nachteile der bisherigen Einrichtung mit den angeführten Proportionalventilen werden mittels der Einrichtung zur Durchführung des Verfahrens beseitigt, die dadurch gekennzeichnet ist, dass sie aus zwei Teilen besteht, und zwar aus einem unteren Grundteil, welcher durch das bisherige Proportionalventil gebildet ist, und aus einem oberen Steuerteil in der Form des Aufbaus auf dem Grundteil, wobei der Steuerteil eine Haube enthält, welche gleichzeitig als ein Deckel der grundlegenden Steuerelemente dient, wobei in eine nicht dargestellte zentrale Öffnung in der Haube ein Industriestecker eingesetzt ist, wodurch ein Kabel axial durchgeht, welches das Steuerventil mit dem PC und den weiteren Peripherien verbindet.

In einem vorteilhaften Beispiel der Ausführung des Steuerventils ist unter der Haube eine Verteilungstafel angeordnet, auf welcher die grundlegenden Steuerelemente untergebracht sind, und zwar die Elektronik für eigentliche Steuerung, welche mindestens durch eine gedruckte Schaltung gebildet ist, ein Druckaufnehmer für eine Rückkopplung und die Pilotventile für eigentliche Regelung.

In einem weiteren vorteilhaften Beispiel der Ausführung des Steuerventils sind die Pilotventile zur Verteilungstafel lösbar verbunden und ebenfalls die Elektronik für eigentliche Steuerung, welche mindestens durch eine gedruckte Schaltung gebildet ist, ist zur Verteilungstafel lösbar verbunden, wobei die Verteilungstafel ist zur Haube mittels der Anschlussschrauben lösbar befestigt und die untere Stirn der Haube ist mit einer Dichtung versehen.

In einem noch weiteren vorteilhaften Beispiel der Ausführung des Steuerventils ist der Steuerteil mit dem Grundteil mittels Verbindungsschrauben verbunden, wobei in einem zusammensetzten Zustand des Steuerventils legt die Haube mit ihrer Dichtung auf die obere Stirn der Verteilungstafel auf, welche mit ihrer unteren Stirn auf die obere Stirn des Grundteiles auflegt.

Die angeführte Aufbereitung des Steuerventils wurde so ausgeführt, dass auf das bestehende Proportionalventil ein neuer Steuerteil in der Form des Aufbaus angeschlossen war, womit der obere Teil des Ventils beseitigt wurde uns auf den Grundteil ein neuer Steuerteil aufgeschraubt wurde, in welchem einige Steuerelemente integriert wurde:
- Elektronik für eigentliche Steuerung
- Druckaufnehmer für eine Rückkopplung
- Pilotventile für eigentliche Regelung.

Mit diesem aufbereiteten Steuerventil ist auch ein software für die Steuerung des so aufbereiteten Ventils mittels einer Serienkommunikation aus der Schaltwarte der ganzen Pressenstrasse geliefert.

Eigentliche Steuerung verlauft so, dass am PC in der Schaltwarte stellt der Benutzer mittels software einen solchen Pressablauf ein, welcher ihm aus dem Sichtpunkt der Technologie am besten kommt und er gibt diesen Ablauf entlang der Serienlinie in den neuen Steuerteil ab, welcher dann das Ventil auf solche Art und Weise steuert, damit der effektive Druckablauf dem vorgeschlagenen Ablauf möglichst viel (in Abhängigkeit von der Kinematik und Dynamik des ganzen Systems) ähnlich sein.

Beitrag:
- Präzisierung des Pressablaufs
- Nötigkeit der Kalibrierung fällt ab
- Zutritt zu allen Ventilen über die Serienkommunikation
- Rückkopplung

Ein bevorzugtes Ausführungsbeispiel der Erfindung ist in der Zeichnung dargestellt. Es zeigen:
**Fig. 1** ein Blockdiagramm des Ensembles für Regelung einer maschinellen Einrichtung,
**Fig. 2** flow diagramm für das Verfahren und den Ablauf der Regelung des Erzeugungsprozesses,
**Fig. 3, 4, 5** ein Diagram Druck - Zeit darstellend die Steuerkurve, enthaltend drei Steuerpunkte, mit der Möglichkeit der Einstellung von einfachen Abläufen des Druckes in Abhängigkeit von der Zeit,
**Fig. 6** ein Beispiel der Einstellung von der Steuerkurve mit der Möglichkeit der Einstellung von komplizierten Abläufen des Druckes in Abhängigkeit von der Zeit,
**Fig. 7** einen Ablauf der effektiven Kurve,
**Fig. 8** das Steuerventil in der axonometrischen Projektion in dem zusammengestellten Zustand, wo der untere Grundteil mittels des bisherigen Proportionalventils gebildet ist, und der obere Steuerteil in der Form des Aufbaus ist,
**Fig. 9** das Steuerventil ebenfalls in der axonometrischen schematischen Projektion in dem zerlegten Zustand mit einer ausführlichen Darstellung des oberen und unteren Teiles und der individuellen Konstruktionselemente.

Für eine bessere Erklärung des Verfahrens und des Ablaufes der Steuerung des Erzeugungsprozesses ist es nötig, einige Grundbegriffe abzugrenzen.

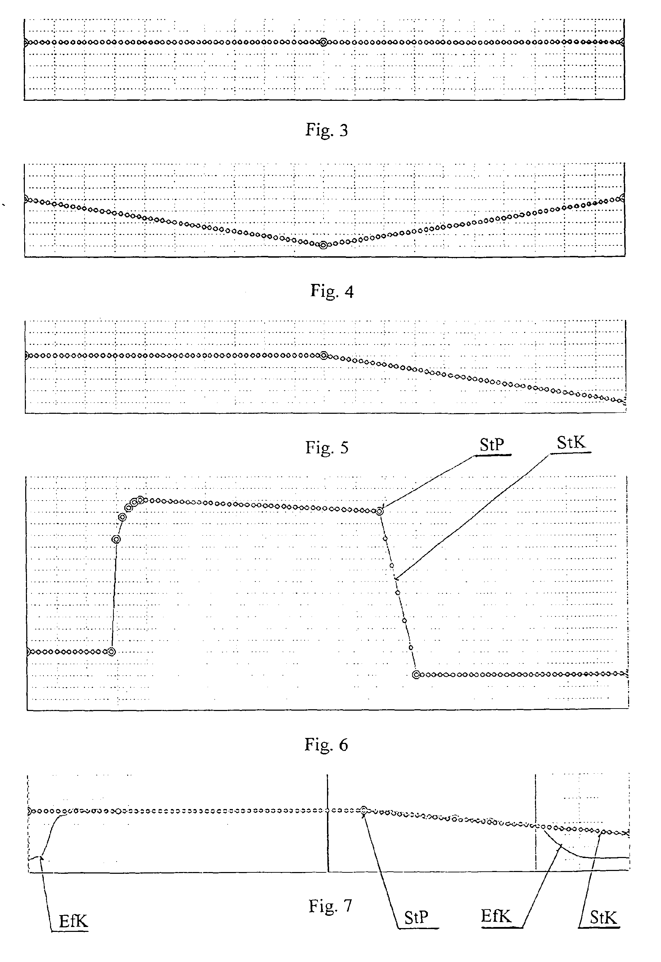

Die Steuerkurve **StK,** welche in Fig. 3, 4, 5 und 6 graphisch dargestellt ist, ist eine ideale Kurve und äußert einen idealen Druckablauf in Abhängigkeit von der Zeit so, wie es von der Maschinenbedienung gefordert ist. Selbst das Proportionalventil wird sich bei der eigentlichen Regulation bemühen, diese ideale Kurve zu erreichen so, damit die effektive Kurve **EfK** sich der Steuerkurve **StK** möglichst näher zu bringen. Es ist nötig dazu hinzufügen, dass die Steuerkurve **StK** in Fig. 3, 4, 5 und 6 mittels des Diagramms Druck - Zeit dargestellt ist, wo der Druck in *kPa* in der senkrechten Achse **y** und die Zeit in *ms* in der waagerechten Achse **x** dargestellt ist.

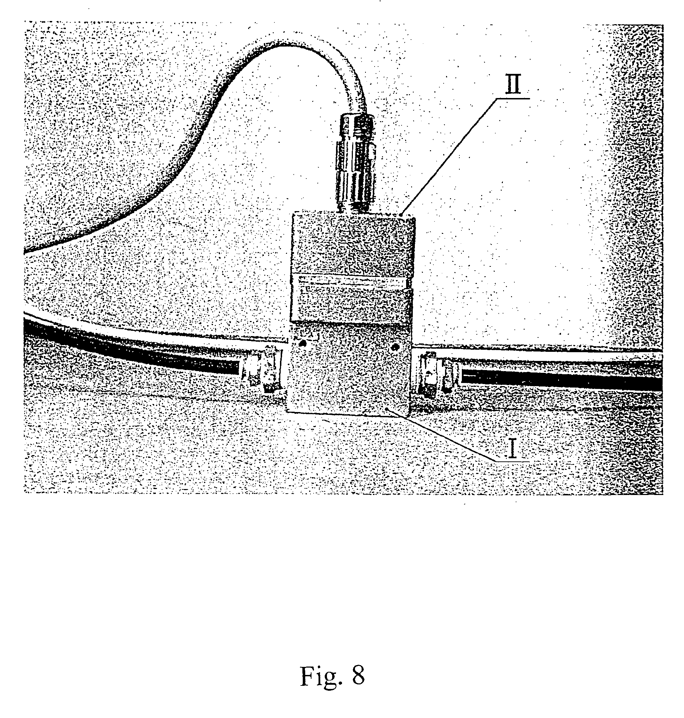

Die effektive Kurve **EfK,** welche im Vergleich mit der Steuerkurve **StK** graphisch in Fig. 7 dargestellt ist, äußert einen effektiven Druckablauf in Abhängigkeit von der Zeit, d.h. den aus den Proportionalventil ausgehenden Druckablauf. Der Ablauf der Steuerkurve **StK** ist hier genauso wie in Fig. 5 dargestellt, d.h. wie eine Gerade, welche in einer Stelle mäßig geknickt wird und ist mit einer größeren Anzahl der mit kleinen Rädchen dargestellten Steuerpunkte versehen. Die effektive Kurve **EfK** ist mit einer vollen Linie gebildet, welche am Anfang des Diagramms bei dem Zuwachs des Druckes zur Steuerkurve **StK** steigt, weiterhin folgt sie im wesentlichen dies Kurve und am Schluss des Diagramms bei dem Abfall des Druckes wieder sinkt.

Der Steuerpunkt **StP,** welcher in Fig. 3, 4, 5 und 6 graphisch dargestellt ist, ist ein wahlfreier Punkt an der Steuerkurve **Stk**, in welchem es zur Änderung der Steigung der Kurve kommen kann, d.h. der Tangente des Winkels der Steuerkurve zur waagerechten Achse. Also ob es im Steuerpunkt **StP** zum Knick der Steuerkurve **StK** kommt, wie es weiterhin in Fig. 4 und 6 dargestellt ist, bedeutet es, dass sich der Winkel der Steuerkurve **StK** zur waagerechten Achse ändert und es kommt zur Änderung der Steigung.

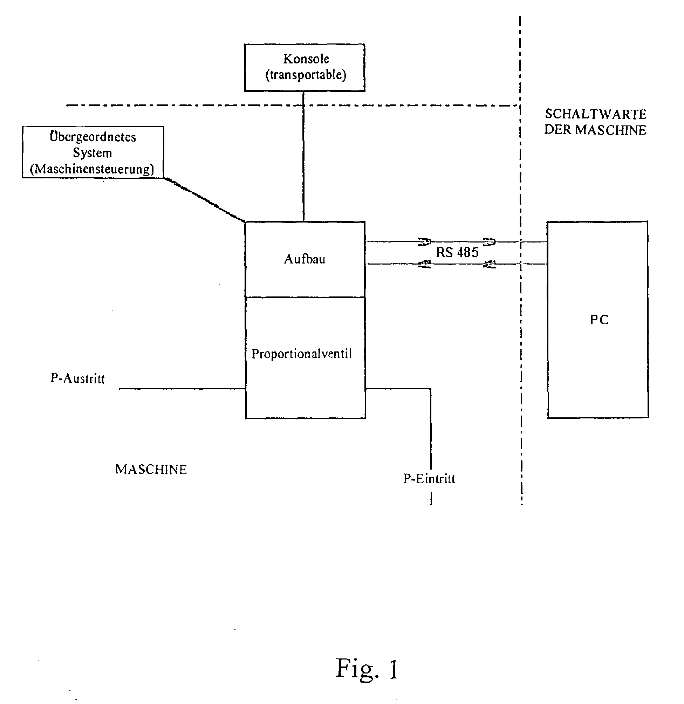

In Fig. 1 ist mittels des Blockschemas ein Ensemble für automatische Steuerung einer maschinellen Einrichtung schematisch dargestellt, wobei unter der maschinellen Einrichtung im wesentlichen eine allgemeine maschinelle Einrichtung gemeint ist, bei welcher der Arbeitsdruck, zum Beispiel der Pressdruck in Abhängigkeit von der Zeit gesteuert wird. Wie aus Fig. 1 folgt, das angeführte Ensemble besteht aus einem mit einem Aufbau versehenen Proportionalventil, wobei das Proportionalventil mit der die maschinelle Einrichtung vorstellende Maschine mechanisch verbunden ist. Mit dem Symbol *P-Eintritt* ist ein Presseintritt und mit dem Symbol *P-Austritt* ist ein Pressaustritt des Ventils bezeichnet. Der Aufbau ist hier mittels einer hier als Linie RS 485 bezeichneten Serienkommunikation beidseitig mit dem PC verbunden, welcher in der Schaltwarte angeordnet ist, weiterhin ist der Aufbau mit einer transportable Steuerkonsole verbunden und weiterhin ist er mit einem übergeordneten System für die Steuerung der Maschine verbunden. Im PC ist ein Steuerprogramm für die Einstellung der Steuerkurve und für eine rückwirkende Sichtbarmachung der effektiven Kurve installiert.

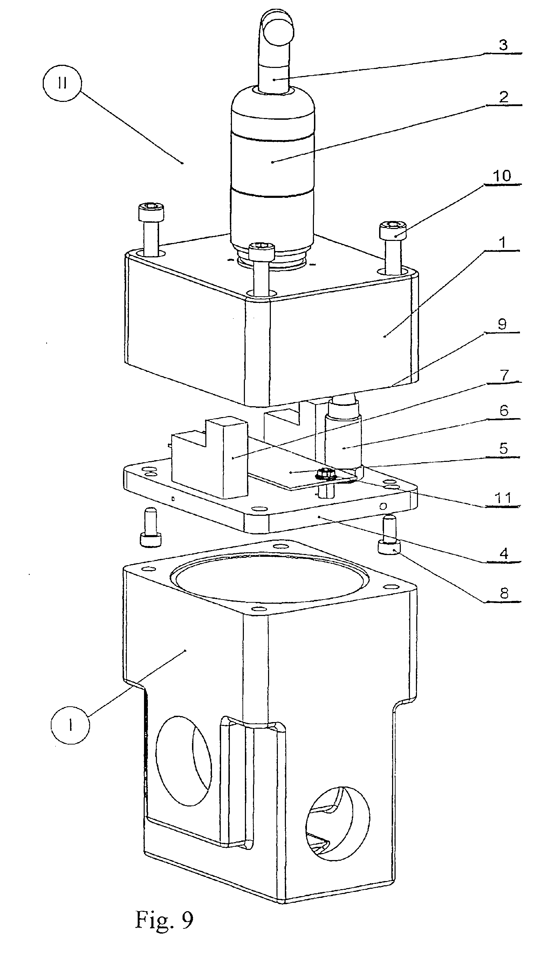

Die Anordnung des Steuerventils für eine gesteuerte Bewegung bei dem Pressen ist am besten in Fig. 9 sichtbar, wo das Steuerventil schematisch in der axonometrischen Projektion in dem zerlegten Zustand mit einer ausführlichen Darstellung auf die obere Stirn der Verteilungstafel **4** auf, welche mit ihrer unteren Stirn auf die obere Stirn des Grundteiles **I** auflegt.

Das Steuerventil in dem zusammengestellten Zustand ist in Fig. 8 dargestellt, wo der untere Grundteil **I** ist mittels des bisherigen Proportionalventils gebildet, und der obere Steuerteil **II** in der Form des Aufbaus auf dem Grundteil **I** ist.

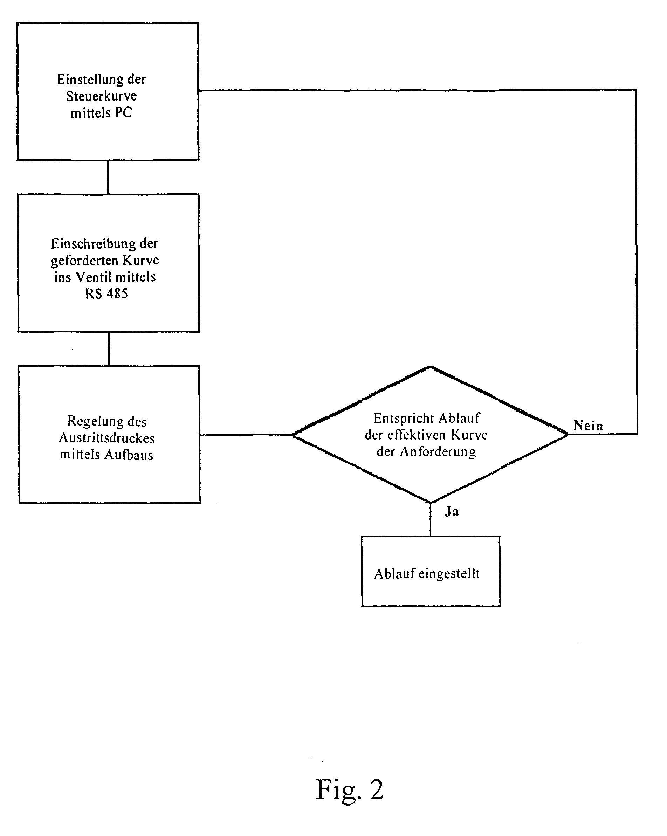

In Fig. 2 ist mittels Flow Diagramms das Verfahren und der Ablauf der Regelung des Erzeugungsprozesses dargestellt.

Mittels des Programms im PC wird die geforderte Steuerkurve eingestellt, welche mittels einer durch die Linie RS485 dargestellten Serienkommunikation in den Aufbau übertragt wird, wo gespeichert bzw. eingeschrieben ist. Im Aufbau werden Steuerelemente integriert: Steuerelektronik, Rückkopplung und eigentliche Regelungseinrichtung.

Die Steuerkurve wird denn mittels der Instrumente im Steuerprogramm im PC so gebildet, dass diese Steuerkurve in eine im voraus gestellte Anzahl der Punkte geteilt wird, zwischen denen ein konstanter Zuwachs ist und der Benutzer bestimmt, welcher dieser Punkte ein Steuerpunkt wird. Während des Prüfbetriebes erwiesen sich eine Verteilung der Steuerkurve in 101 Punkte, welche gegenseitig um einen vom Benutzer definierten Zuwachs entfernt sind. Der Zuwachs kann zum Beispiel 15 ms sein und er ist als ein Zuwachs in der Achse **x** bezeichnet. Weiterhin erwiesen sich es, dass die Anzahl der Steuerpunkte kann 50 bestimmen, und zwar nach der Kompliziertheit der Steuerkurve. Je komplizierter die Steuerkurve ist, desto mehr Steuerpunkte ausgenutzt werden und im Gegenteil. Der Steuerpunkt kann sich dann auf einen höheren oder niedrigeren Druck verschieben und damit kann er eine Form der Steuerkurve bestimmen. Durch Verschiebung des Steuerpunktes an eine andere Stelle wird die Form der Steuerkurve zum nahesten linken und zum nahesten rechten Punkt so beeinflusst, dass der Ablauf zwischen eigentlichen Punkten linear ist.

Mittels des angeführten Aufbaus wird der aus dem Proportionalventil ausgehende Austrittsdruck reguliert. Ob der Ablauf der effektiven Kurve der Anforderung an das Presserzeugnis entspricht, ist die Steuerkurve richtig eingestellt. Ob der Ablauf der effektiven Kurve der Anforderung an das Presserzeugnis nicht entspricht, ist es nötig zur Einstellung einer anderen Steuerkurve zurückkehren, welche bessere Eigenschaften für das Presserzeugnis hätte.

In Fig. 3, 4, 5 ist mittels des Diagrams Druck - Zeit eigentliche Steuerkurve dargestellt, welche einen idealen Druckablauf mit der Möglichkeit der Einstellung von einfachen Abläufen des Druckes in Abhängigkeit von der Zeit äußert. Die Steuerkurve enthält drei Steuerpunkte in Abhängigkeit von der Zeit, wobei in Fig. 3 alle Steuerpunkte in einer Ebene sind, d.h. sie stellen einen gleichen Druck vor. In Fig. 4 ist es eine Beeinflussung der ganzen Steuerkurve durch eine vertikale Verschiebung des mittleren Punktes geäußert. In Fig. 5 ist es eine Beeinflussung der rechten Hälfte der Steuerkurve durch eine vertikale Verschiebung des rechten Punktes geäußert.

In Fig. 6 ist ein Beispiel der Einstellung von der Steuerkurve mit der Möglichkeit der Einstellung von komplizierten Abläufen des Druckes in Abhängigkeit von der Zeit. Eine Ausnutzung dieses Verfahrens der Einstellung bietet sich überall dort an, wo es nötig ist, die Steuerkurve schnell zu ändern (zum Beispiel bei Änderung des Sortiments der Erzeugung), oder eine komplizierte Steuerkurve gefordert ist. Es ist möglich, einen einfachen viereckigen Ablauf ohne irgendeine Steuerung zu erzielen, aber ob ein schiefer Teil nötig ist, ist die angeführte Ausführung ideal. Es ist klar, dass auch einfache Abläufe können reguliert werden. Es gibt deshalb eine unerschöpfliche Menge der Möglichkeiten, wo man diese Einrichtung benutzen kann, und sie sind bestimmt nicht nur auf die Glasindustrie spezialisiert.

## Patentansprüche

1. Verfahren zur Regelung des Ablaufs des Erzeugungsprozesses, insbesondere ein Verfahren zur Regelung des Erzeugungsprozesses in der Glasindustrie, bei der Fertigung der Glaserzeugnissen zum Beispiel bei dem Pressblasen der Glaskörper aus der geschmolzenen Glasmasse, insbesondere für eine gesteuerte Bewegung bei dem Pressen der Glasmasse mit dem Pressstempel, mittels des Proportionalventils, womit der Ablauf des Pressdruckes in Abhängigkeit von der Zeit nach einer Steuerkurve aus PC gesteuert wird,
**dadurch gekennzeichnet, dass** mittels des Programms im PC die Steuerkurve gebildet wird, welche eine ideale Kurve ist, die nach der Anforderung der Maschinenbedienung einen idealen Druckablauf in Abhängigkeit von der Zeit dargestellt, weiterhin wird die Steuerkurve mittels einer Serienkommunikation in einen aufbereiteten Aufbau des Proportionalventils übertragt, wo gespeichert bzw. eingeschrieben ist, weiterhin wird es mittels des Aufbaus des Proportionalventils ein für eine Bildung einer effektiven Kurve Austrittsdruck reguliert, der einen effektiven Druckablauf in Abhängigkeit von der Zeit darstellt, d.h. den aus dem Proportionalventil ausgehenden Druckablauf, weiterhin wird mittels des Aufbaus der Ablauf der effektiven Kurve mit dem Ablauf der Steuerkurve nach der Anforderung der Maschinenbedienung vergleicht und ob der Ablauf der effektiven Kurve der Steuerkurve nach der Anforderung der Maschinenbedienung entspricht, ist der Ablauf des Erzeugungsprozesses richtig eingestellt, und ob der Ablauf der effektiven Kurve der Steuerkurve nach der Anforderung der Maschinenbedienung nicht entspricht, wird die Ausbildung der Steuerkurve im PC wiederholt.

2. Verfahren nach Anspruch 1, **dadurch gekennzeichnet, dass** die Steuerkurve mittels der Instrumente in dem PC Steuerprogramm so gebildet wird, dass diese Steuerkurve in eine im voraus gestellte Anzahl der Punkte geteilt wird, unter denen ein konstanter Zuwachs ist und die Maschinenbedienung bestimmt, welcher dieser Punkte ein Steuerpunkt wird, in welchem es zur Änderung der Steigung der Kurve kommt, d.h. der Tangente des Winkels der Steuerkurve zur waagerechten Achse.

3. Einrichtung zur Durchführung des Verfahrens nach Anspruch 1, **dadurch gekennzeichnet, dass** sie aus zwei Teilen besteht, und zwar aus einem unteren Grundteil (I), welcher durch das bisherige Proportionalventil gebildet ist, und aus einem oberen Steuerteil (II) in der Form des Aufbaus auf dem Grundteil (I), wobei der Steuerteil (II) eine Haube (1) enthält, welche gleichzeitig als ein Deckel der grundlegenden Steuerelemente dient, wobei in eine nicht dargestellte zentrale Öffnung in der Haube (1) ein Industriestecker (2) eingesetzt ist, wodurch ein Kabel (3) axial durchgeht, welches das Steuerventil mit dem PC und den weiteren Peripherien verbindet.

4. Einrichtung nach Anspruch 3, **dadurch gekennzeichnet, dass** unter der Haube (1) eine Verteilungstafel (4) angeordnet ist, auf welcher die grundlegenden Steuerelemente untergebracht sind, und zwar die Elektronik (5) für eigentliche Steuerung, welche mindestens durch eine gedruckte Schaltung gebildet ist, ein Druckaufnehmer (6) für eine Rückkopplung und die Pilotventile (7) für eigentliche Regelung.

5. Einrichtung nach Anspruch 3 und 4, **dadurch gekennzeichnet, dass** die Pilotventile (7) zur Verteilungstafel (4) lösbar verbunden sind und ebenfalls die Elektronik (5) für eigentliche Steuerung, welche mindestens durch eine gedruckte Schaltung gebildet ist, ist zur Verteilungstafel (4) lösbar verbunden, wobei die Verteilungstafel (4) zur Haube (1) mittels der Anschlussschrauben (8) lösbar befestigt ist und die untere Stirn der Haube (1) ist mit einer Dichtung (9) versehen.

6. Einrichtung nach Ansprüche 3 bis 5, **dadurch gekennzeichnet, dass** der Steuerteil (II) mit dem Grundteil (I) mittels Verbindungsschrauben (10) verbunden ist, wobei in einem zusammensetzten Zustand des Steuerventils legt die Haube (1) mit ihrer Dichtung (9) auf die obere Stirn der Verteilungstafel (4) auf, welche mit ihrer unteren Stirn auf die obere Stirn des Grundteiles (I) auflegt.
